Europäisches Patentamt

European Patent Office

Office européen des brevets

Publication number: **0 505 998 A2**

# EUROPEAN PATENT APPLICATION

Application number: **92105083.7**

Int. Cl.⁵: **G02B 27/26, G03B 35/26**

Date of filing: **25.03.92**

Priority: **28.03.91 US 676686**

Date of publication of application:
**30.09.92 Bulletin 92/40**

Designated Contracting States:
**DE DK FR GB IT NL SE**

Applicant: **HONEYWELL INC.**
**Honeywell Plaza**
**Minneapolis Minnesota 55408(US)**

Inventor: **Hancock, William R.**
**1026 East Tierra Buena Lane**
**Phoenix, AZ 85022(US)**
Inventor: **Silverstein, Louis D.**
**9795 East Pershing Avenue**
**Scottsdale, AZ 85260(US)**

Representative: **Rentzsch, Heinz**
**HONEYWELL EUROPE HOLDING GMBH**
**Patent- und Lizenzabteilung Kaiserleistrasse**
**39, Postfach 10 08 65**
**W-6050 Offenbach am Main(DE)**

Stereoscopic display system.

A color stereoscopic display system utilizes matrix displays (14, 12), polarized beam combining means (26), and polarization transformation waveplates (30, 38) to present differently circularly polarized left and right images, respectively, in three-dimensional color to an observer wearing circularly polarized glasses (48, 50).

*Fig. 1*

The invention pertains to stereoscopic matrix displays, particularly to color matrix display non-field-sequential stereoscopic display systems.

## BACKGROUND OF THE INVENTION

Stereoscopic displays, even color displays, have been in the related art for some time. Some systems involve cathode-ray tube (CRT) based, field-sequential stereoscopic display systems. Existing CRT-based field-sequential systems, which utilize cross-polarization, have inter-ocular cross talk which is due to timing and sychronization problems. Horizontal offset in raster CRT or other based systems is typically limited by constraints on horizontal addressability imposed by the effective horizontal resolution of the CRT. Small vertical offsets are inherent in field-sequential stereoscopic display systems due to the fact that the left and right eye views are presented on alternating, inter-laced fields.

## SUMMARY OF THE INVENTION

The invention as described in the independent claims may utilize color matrix displays. Each display provides the full frame of the right eye and left eye views, in other words, the displays are not field-sequential. The images are optically combined in an elegant manner to be projected to the viewer as right and left circular polarized images combined as one. The viewer can see full-color stereoscopic images with a set of simple, inexpensive circularly polarized glasses. Because the system is not field-sequential, it does not have to be time-multiplexed. The circularly polarized left and right eye images are simultaneously presented to each eye with the full resolution the displays would have in full-frame nonstereo operation. Preferred embodiments and details of the invention are described in the dependent claims.

The present invention's combining of the two matrix display images enable the use of gray scale techniques without the problems caused by correlations between the gray scales and direct off-axis viewing of the matrix display panels. A gray scale may be used in the present system to anti-alias the images on each of the two panels and provide a level of subpixel addressability which can enable very fine-grained and precise positioning of the disparate points within the two eye images relative to each other. Since human stereoscopic acuity is hyperacute (i.e., on the order of five arc seconds), the extremely fine horizontal offsets between the left-eye image points and the right-eye image points which can be provided by subpixel addressability, may be used to greatly enhance stereoscopic visual performance. It is addressability which performs this function and such stereoscopic enhancement is not directly dependent on the resolution of the matrix display panels.

The present invention virtually eliminates vertical offsets between the left eye and right eye images because of the lack of alternating interlaced fields.

The present system may utilize flexible, advanced display processor techniques. For instance, a separate processor may be allocated to simultaneously generate the images for each eye in parallel. The invention takes advantage of the inherent linear polarization of matrix displays and combines the images into one, but each view having a particular circular polarization. Viewing stereoscopic images which utilize circular polarization allows one to rotate the head without suddenly loosing the stereoscopic effect, and reduces light aberrations that appear with linear polarization viewing systems in places such as aircraft cockpits.

For viewing images with the invention, the field lens implementation or the projection approach may be used. With the field lens implementation, the observer views a stereoscopic virtual image. There are two advantages of this implementation. First, the system is then relatively immune to diffuse and specular reflections arising from sources of ambient illumination in the viewing environment. Second, a stereoscopic virtual image illuminates the perception of a fixed image plane (i.e., the display surface) and a fixed reference for a visual accommodation and binocular vergence and results in enhanced depth perception and stereoscopic display performance.

For the projection approach in the present system, the stereoscopic display allows flexibility in the synthesis of a multi-color image. It is possible to separate color image components such as the short-wavelength image components (which contribute little or nothing to human spatial resolution or to the processing of stereoscopic visual information) and to present them at a much lower resolution than the medium (green) and long (red) wavelength components. This provides for higher resolution matrix displays which require only red and green pixels, separately and respectively, for the two primary image sources, while utilizing a single, much lower resolution monochromatic blue panel as a common color rendering source for both eye views (see earlier EP 91 116 307.9).

## BRIEF DESCRIPTION OF THE DRAWING

Figure 1    shows the basic configuration for a stereoscopic display system utilizing dual matrix display image sources.

Figure 2    reveals an alternate configuration of the stereoscopic display system.

DESCRIPTION OF THE PREFERRED EMBODIMENT

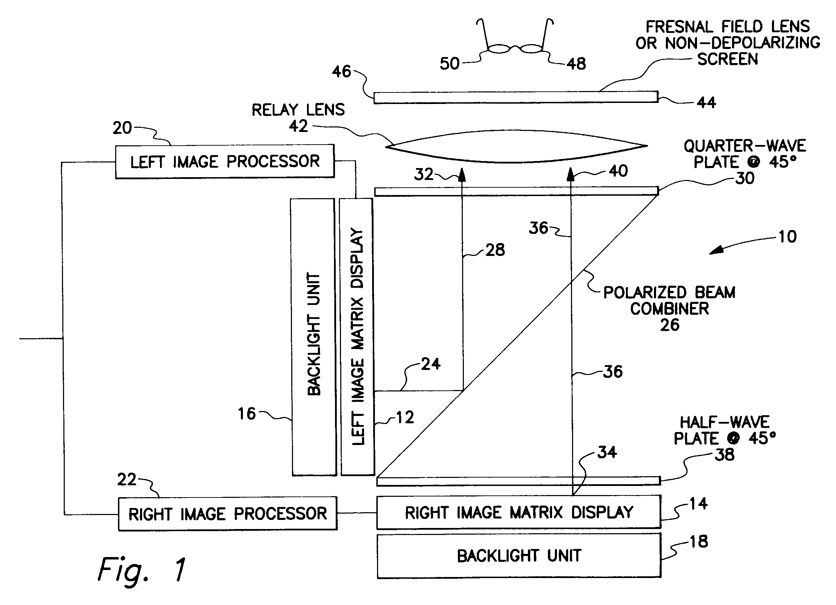

Figure 1 illustrates the basic concept of system 10. The left-eye images are presented by a 1024 x 1024 element color liquid crystal matrix display 12. Likewise, the right eye images are presented by a 1024 x 1024 color liquid crystal matrix display 14. Displays 12 and 14 have back light units 16 and 18, respectively. The left and right images are provided to matrix displays 12 and 14, respectively, from left image processor 20 and right image processor 22. Processors 20 and 22 have great flexibility when generating left and right images. The images may be conversions of analog signals conveying the left and right images from a camera or video storage device, or may modify incoming images thereby providing special effects. Also, the processors 20 and 22 may generate images of various sorts intended to accomplish certain objectives for the viewer.

The components and functional aspects of system 10 are described in the following. Structurally, an example layout would be like that of Figure 1 where displays 12 and 14 are positioned orthogonal to each other and having a combiner 26 at a 45 degree angle and extending from a corner where the displays 12 and 14 are closest to each other. Light beam 24 from left image matrix display 12 has a linear polarization of a first (e.g., vertical) orientation which impinges polarized beam combiner 26 and is reflected by combiner 26 as beam 28 with the same polarization and orientation as beam 24. Beam 28 enters quarterwave plate 30 and exits plate 30 as beam 32 having a first (e.g., left) circular polarization. Light beam 34 exits right image matrix display 14, having the linear polarization of a first orientation, like that of light beam 24. Light beam 34 passes through half wave plate 38 and becomes light beam 36 having a linear polarization of a second orientation (i.e., horizontal). Beam 36 passes through polarized beam combiner 26 without any effect on its polarization and orientation. Beam 36 passes through quarterwave plate 30 and becomes beam 40 having a second (i.e., right) circular polarization. Beams 32 and 40 of first and second circular polarizations, respectively, present the left and right images. Light beams 32 and 40 are conveyed by relay lens 42 onto a Fresnel field lens 44 for presenting stereoscopic virtual images, or to a non-depolarizing screen 46 for projection of the images to the viewer. The viewer or observer looks at the presented images through eye glasses having lenses 48 and 50. Lens 48 has a first circular polarization which permits light beam 32 to pass through lens 48 to the viewer's left eye and blocks light beam 40 of the second circular polarization. On the other hand, lens 50 is of a second polarization and permits the passing of light beam 40 of the second polarization and blocks light of beam 32 having a first circular polarization.

Thus, the observer looking through the glasses can view color stereoscopic images.

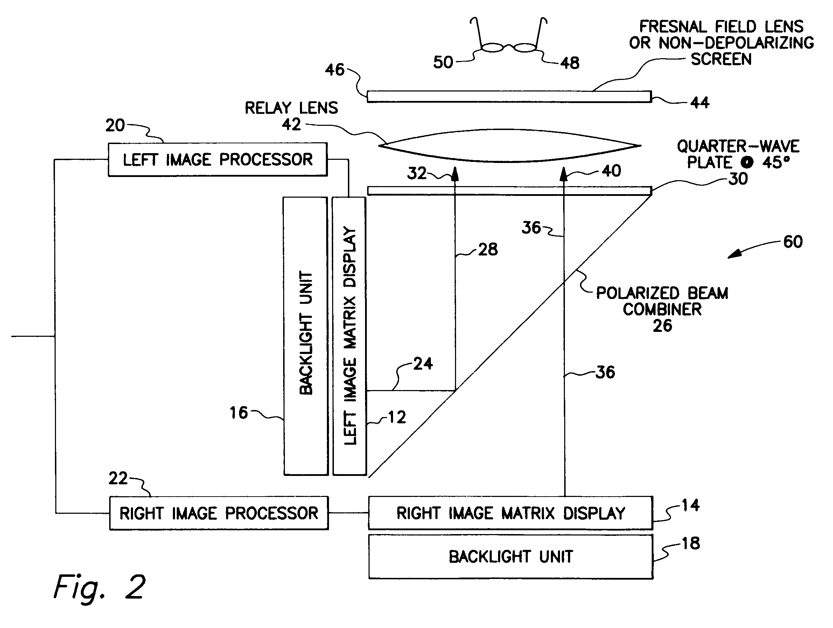

Figure 2 shows another embodiment 60 of the present invention. The difference from embodiment 10 is that half-wave plate 38 is absent. To avoid use of plate 38, right image matrix display 14 is constructed to have its linear polarization rotated 90 degrees. Then the light from display 14 has the same linear polarization as beam 36.

Half-wave plate 38 may be positioned in front of left display 12 if display is reconstructed to have its linear polarization rotated 90 degrees like that of display 14 in Figure 2. Or, as long as light beams 24 and 26 have different polarizations, the kind of polarization is immaterial as long as the polarized beam combiner is designed to be tuned to the particular polarization of the light beam desired to be reflected.

## Claims

1. A stereoscopic display system comprising:
   a) first display means (14) for emanating a first light beam (34) having a first linear polarization;
   b) first polarization transformation means (38), proximate to said first display means (14) for transforming the first light beam (34) into a second light beam (36) having a second linear polarization;
   c) second display means (12) for emanating a third light beam (24) having the first linear polarization;
   d) polarized beam combining means (26) for passing the second light beam (36) having the second linear polarization and reflecting the third light beam (24) having the first linear polarization thereby resulting in the combining of the second and third beams together in approximately the same direction; and
   e) second polarization transformation means (30) for transforming the third beam (24, 28) having the first linear polarization into a fourth beam (32) having a first circular polarization and transforming the second beam (36) having the second linear polarization into a fifth beam (40) having a second circular polarization (Fig. 1).

2. A stereoscopic display system comprising:
   a) a first display (14) for emanating a first light beam (36) having a first linear polarization;

b) a second display (12) for emanating a second light beam (24) having a second linear polarization;

c) a polarized beam combining plate (26) for passing the first light beam (36) having the first linear polarization and reflecting the second light beam (24) having the second linear polarization thereby resulting in the combining of the first (36) and second (24, 28) beams together in approximately the same direction; and polarization transformation means (30) for transforming the first beam having the first linear polarization into a third beam (40) having a first circular polarization and transforming the second beam (24, 28) having the second linear polarization into a fourth beam (32) having a second circular polarization (Fig. 2).

3. The system of claim 1, **characterized in that** the first polarization transformation means (38) is a half-wave plate.

4. The system according to claim 1 or 3, **characterized in that** the second polarization transformation means (30) is a quarter-wave plate.

5. The system of claim 2, **characterized in that** the polarization transformation means (30) is a quarter-wave plate.

6. The system according to one of the preceding claims, **characterized in that** the display means (14, 12) is a matrix display.

7. The system of claim 1, **characterized by** circularly polarized glasses (48, 50) having a first and a second circular polarization, respectively, for observing the fourth (32) and fifth (40) beams, respectively.

8. The system of claim 2, **characterized by** circularly polarized glasses (48, 50) having a first and a second circular polarization, respectively, for observing the third (40) and fourth (32) beams, respectively.

Fig. 1

FRESNAL FIELD LENS OR NON-DEPOLARIZING SCREEN

RELAY LENS 42

QUARTER-WAVE PLATE @ 45°

POLARIZED BEAM COMBINER 26

HALF-WAVE PLATE @ 45°

LEFT IMAGE PROCESSOR 20

RIGHT IMAGE PROCESSOR 22

BACKLIGHT UNIT 16

LEFT IMAGE MATRIX DISPLAY 12

RIGHT IMAGE MATRIX DISPLAY 14

BACKLIGHT UNIT 18

EP 0 505 998 A2

Fig. 2